# EUROPEAN PATENT APPLICATION

(11) **EP 4 102 664 A1**
(43) Date of publication of application: **14.12.2022**
(21) Application number: 22175914.5
(22) Date of filing: 27.05.2022
(51) Int. Cl.: H02G 5/02, H02B 1/21

(54) **MOUNTING SYSTEM FOR BUSBARS OF AN ELECTRICAL SWITCHGEAR WITH IMPROVED CAPABILITY FOR FIXING ADDITIONAL EQUIPMENT**

(30) Priority: 10.06.2021 GB 202108343
(71) Applicant: Eaton Intelligent Power Limited, D04 Y0C2 Dublin 4 (IE)
(72) Inventor: GATTRINGER, Thomas, 3970 Weitra (AT); MUELLNER, David, 3950 Gmünd (AT)
(74) Representative: Eaton IP Group EMEA

(57) **Abstract**

A mounting system (1) for busbars (L1..L3, N) of an electrical switchgear (12) is disclosed, which comprises a plurality of holder rails (2a, 2b), connection profiles (3a..3d) to interconnect the holder rails (2a, 2b) and to effect a distance between the holder rails (2a, 2b) and which comprises a plurality of busbar holders (4a, 4b), which are provided to receive the busbars (L1 ..L3, N) and which are arranged in the holder rails (2a, 2b). At least one of the connection profiles (3a..3d) has at least one slot (10) running parallel to a longitudinal extension of said connection profile (3a..3d), wherein the at least one slot (10) has an undercut in its cross-section. Further on, an arrangement (6) and an electrical switchgear (24) with a plurality of busbars (L1 ..L3, N) and a mounting system (1) for of the above kind are disclosed.

## Description

### TECHNICAL FIELD

The invention relates to a mounting system for busbars of an electrical switchgear, which comprises a plurality of holder rails, connection profiles to interconnect the holder rails and to effect a distance between the holder rails and which comprises a plurality of busbar holders, which are provided to receive the busbars and which are arranged in the holder rails. Moreover, the invention relates to an arrangement with a plurality of busbars and a mounting system of the above kind, by which the busbars are fixed. Finally, the invention relates to an electrical switchgear, which comprises a number of busbars, at least one switching device electrically connected to the busbars and a mounting system of the above kind, by which the busbars are held in position within the electrical switchgear.

### BACKGROUND ART

A mounting system of the above kind in principle is known in prior art. Unfortunately, the existing mounting systems are poorly usable when additional equipment shall be mounted nearby the busbars. Often, simple cable ties are used for that or additional bores are made into the mounting system to fasten additional equipment by means of screws. However, this may cause serious trouble if the part of the mounting system, which a hole is drilled into, is made of metal because conductive swarf may get into the switchgear in an uncontrolled manner and cause short circuits and arc flashes later on during operation of the switchgear. Cable ties on the other hand usually have just limited capability to hold additional equipment in a fixed position over a longer time period given the vibrations, which may occur within a switchgear.

### DISCLOSURE OF INVENTION

Accordingly, an object of the invention is the provision of an improved mounting system, an improved arrangement with such a mounting system and an improved switchgear. In particular, a solution shall be proposed, which is well suitable for mounting additional equipment nearby the busbars.

The object of the invention is solved by a mounting system as disclosed in the opening paragraph, wherein at least one of the connection profiles has at least one slot running parallel to a longitudinal extension of said connection profile and wherein the at least one slot has an undercut in its cross-section. In other words, the at least one of the connection profiles particularly can comprise a T-slot running parallel to the longitudinal extension of said connection profile.

Moreover, the object of the invention is solved by an arrangement with a plurality of busbars and a mounting system of the above kind, by which the busbars are fixed.

Finally, the object of the invention is solved by an electrical switchgear, which comprises a number of busbars, at least one switching device electrically connected to the busbars and a mounting system of the above kind, by which the busbars are held in position within the electrical switchgear.

By use of the at least one slot, additional equipment can be mounted to the at least one of the connection profiles and hence nearby the busbars. Additional equipment can be a current sensor, a voltage sensor, a power sensor, a temperature sensor, a wireless transmitter, a wireless receiver and the like. Additional mounting means like T-head bolts, slot nuts, snap-in pins, snap in rivets, expanding rivets, etc. can be used to mount the additional equipment to the at least one slot. The additional equipment can be used to monitor the busbars and to transmit sensor data to a receiving device, in particular wirelessly. As outlined above, for example the current through the busbars, the voltage of the busbars, the power transmitted by the busbars, the temperature of the busbars can be monitored (in particular contactless by an infrared sensor). In addition, also data to control the measurement equipment (e.g. commands) can received by the additional equipment.

Thus, the at least one of the connection profiles forms means, which can flexibly be equipped with additional equipment, in particular also in the assembled state of the mounting system and in particular when it is built into a switchgear. Hence, the proposed mounting system is particularly usable for updating switchgears with additional equipment later on. Further on, there is no risk of conductive swarf getting into the switchgear in an uncontrolled manner, and the proposed connection profile forms suitable means to hold additional equipment in a fixed position over a longer time period within a switchgear.

Further advantageous embodiments are disclosed in the claims and in the description as well as in the figures.

Beneficially, the at least one of the connection profiles
- has two slots and a cross section, which is rotational symmetric by a rotation angle of 180° or
- has four slots and a cross section, which is rotational symmetric by a rotation angle of 90°.

So, there is a plurality of possibilities to mount additional equipment to the connection profile, and the connection profile can be arranged within the mounting system in a number of positions without changing its function. In case of four slots, an X-profile is formed. X-profiles are commercially available in a number of shapes and in a number of dimensions. So, the proposed mounting system can be put into practice quickly.

Preferably, the at least one slot is arranged on a side surface of the at least one of the connection profiles which points away from the busbar holders or points in a direction transverse to a longitudinal extension of the holder rails. Hence, said slot is accessible easily even when assembly of the mounting system is finished and also holds the busbars. Usually, there is also space available for additional equipment adjacent to said side surfaces in said assembled state of the mounting system.

Further on, an outer contour of the cross-section of the at least one of the connection profiles is rectangular, in particular quadratic. Accordingly, flat mounting surfaces are formed on the connection profile which can be used for mounting additional equipment.

Advantageously,
- the holder rails are strut profiles with an H cross section or U cross section and
- a width of the rectangular cross-section of the at least one of the connection profiles matches the inside dimension of the H cross section or U cross section of the holder rail.

In this embodiment, the width of the rectangular cross-section of the at least one of the connection profiles is slightly below or slightly above the inside dimension of the H cross section or U cross section of the holder rail. So, a rotation of the connection profile is avoided, even if just a single connection profile screw is used to fix the connection profile or even if mounting means for the connection profile, e.g. connection profile screws or connection profile rivets, unintentionally fall of the mounting system during operation. So, the mounting system is fault tolerant very much, and the holder rail acts as a kind of an assembly jig during assembly what eases manufacturing the mounting system. This is particularly true if the width of the connection profile is slightly above the inside dimension of the H cross section or U cross section of the holder rail. The connection profile is held in a holder rail by friction then. So, the connection profile does not fall out of the holder rail unintentionally until the connection profile is finally fixed to the holder rail by mounting means, e.g. by connection profile screws or connection profile rivets. This is particularly helpful if a connection profile shall be mounted to a holder rail upside down. However, it could also be useful if the width of the connection profile is slightly below the inside dimension of the H cross section or U cross section of the holder rail. In this case, the connection profile fits into a holder rail easily.

Moreover, it is of advantage if
- the at least one of the connection profiles has a central hole running along a longitudinal axis of the at least one of the connection profiles and
- the at least one of the connection profiles is mounted to the holder rails by means of self-cutting connection profile screws screwed into said central hole.

The use of self-cutting connection profile screws provides a number of advantages. First, no separate thread has to be cut into the connection profile because a self-cutting screw cuts the thread itself. Second, a self-cutting screw does not turn out on its own easily, even if the mounting system is exposed to vibrations like they occur within a switchgear. Hence, an additional screw locking can be omitted. Third, standard-length screws can be used for a variety of lengths of the connection profiles. Hence, the bill of materials can be kept short. Fourth, self-cutting screws can be made shorter than screws, which are fixed by a nut. Accordingly, even if a connection profile screw falls off from the mounting system, the likelihood for an arc flash or short circuit caused by the connection profile screws is comparably low. This is based on the simple reason that a self-cutting screw is shorter than a screw fixed by a nut and cannot bridge large gaps between conductors under voltage.

It is also of advantage if the at least one of the connection profiles is embodied as an extruded or pultruded profile and made of aluminum or plastic. In particular, the connection profile can be made from fiber reinforced resin and particularly by use of extrusion or pultrusion. Extrusion and pultrusion provide the advantage that areas of different fiber density can be defined within the connection profile. Hence, the connection profile can be made more robust where it is desired. Extrusion and pultrusion provide the further advantage that connection profile can be produced in standard lengths (several meters) and can be cut later on as desired to fit in any application. Accordingly, the mounting system can be adapted to different heights of the busbars of busbars easily. The same also counts if aluminum is used as material for the connection profile.

Hence, one further advantage of the proposed solution is that a big range of busbar dimensions and/or busbar configurations can be covered by the mounting system although the parts which are used therefore basically remain the same for all these busbar dimensions and/or busbar configurations. So, flexibility of the mounting system is increased at reduced costs compared to prior art systems.

This is particularly true if all connection profiles have an identical cross-section what even further reduces the bill of materials.

In addition, it is of advantage if the holder rails are made of plastic and the busbar holders are made of metal. Advantageously, the holder rail provides electrical insulation and hence also avoids induced eddy currents caused by the current through the busbars. A closed ferrous material loop around the busbars is avoided naturally by the non-ferrous material of the proposed holder rail. This is not the case for prior art holder rails made of metal where special measures have to be taken to avoid such a ferrous material loop and to avoid or at least limit said induced currents or eddy currents. So, this embodiment is particularly advantageous if the connection profiles are made of aluminum because the plastic holder rail provides insulation anyway.

This is the other way around what in prior art is usually done where the holder rails are made of metal and the busbar holders are made of plastic. However, choosing materials in the proposed way provides the advantage that the busbar holders are comparably robust and easily withstand the (electromagnetic) forces occurring in a switchgear. Because the contact surface between a busbar holder and a holder rail is comparably large, in addition those high forces can easily be transferred from the busbar holder to the holder rail, despite the fact that the holder rail is made from plastic.

Finally it is of advantage if the holder rails are embodied as extruded or pultruded profiles. Basically, here the same applies what have been said with respect to extruded or pultruded connection profiles. In particular, the holder rails can be made from fiber reinforced resin and particularly by use of extrusion or pultrusion. As said, extrusion and pultrusion provide the advantage that areas of different fiber density can be defined within the holder rails and hence the holder rails can be made more robust where it is desired. Extrusion and pultrusion provide the further advantage that also the holder rails can be produced in standard lengths (several meters) and can be cut later on as desired to fit in any application. Accordingly, the mounting system can be adapted to different numbers of busbars easily. So, together with connection profiles in standard length, the mounting system can be adapted to different heights and to different numbers of busbars easily.

### BRIEF DESCRIPTION OF DRAWINGS

The invention now is described in more detail hereinafter with reference to particular embodiments, which the invention however is not limited to.
- Fig. 1: shows the mounting system for busbars in mounted state of the busbars in perspective view;
- Fig. 2: shows the mounting system of Fig. 1 in exploded view;
- Fig. 3: shows a square cross-section of a connection profile with four slots;
- Fig. 4: shows a rectangular cross-section of a connection profile with one slot;
- Fig. 5: shows a rectangular cross-section of a connection profile with two slots;
- Fig. 6: shows a circular cross-section of a connection profile with one slot;
- Fig. 7: shows an exploded view of how a temperature sensor can be mounted to a connection profile;
- Fig. 8: shows an exploded view of how a cable clip can be mounted to a connection profile;
- Fig. 9: shows the temperature sensor and the cable clip in the mounted state;
- Fig. 10: shows an exploded view of how a current sensing equipment can be mounted to a connection profile;
- Fig. 11: shows the current sensing equipment in the mounted state;

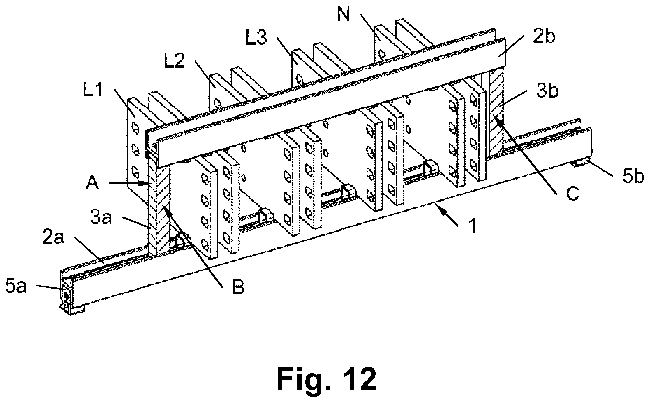

- Fig. 12: shows preferred side surfaces on a connection profile for mounting additional equipment and
- Fig. 13: shows a partial side view of a switchgear.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure, and indication of the orientation and/or relative position has to be amended in different figures accordingly as the case may be.

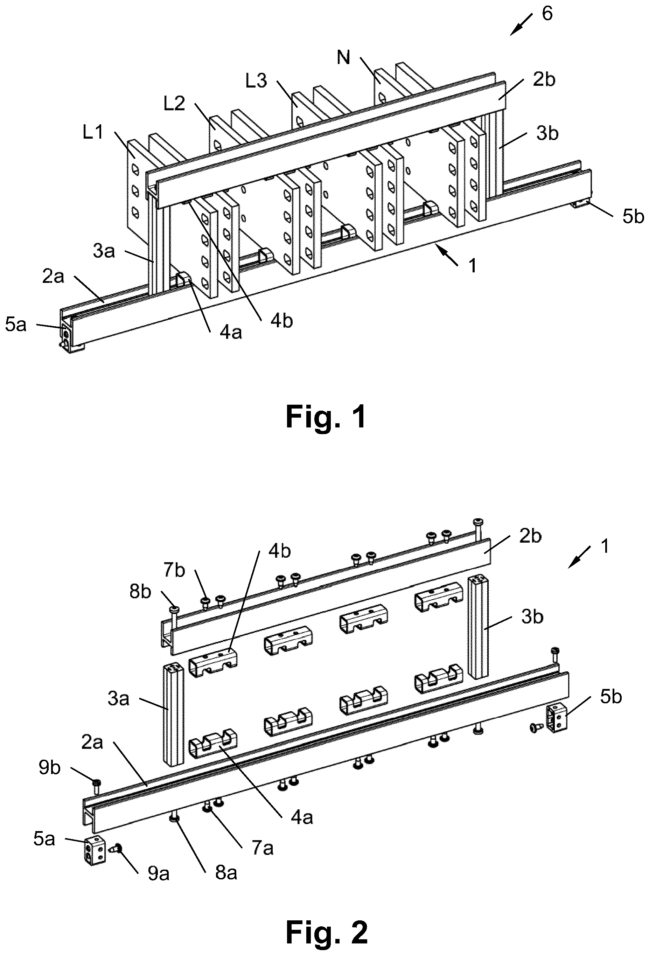

Figs. 1 and 2 show a mounting system 1 for busbars L1 ..L3, N of an electrical switchgear in perspective view. Fig. 1 shows the mounting system 1 in mounted view and Fig. 2 in exploded view.

The mounting system 1 comprises two holder rails 2a, 2b, connection profiles 3a, 3b to interconnect the holder rails 2a, 2b and to effect a distance between the holder rails 2a, 2b and comprises a plurality of busbar holders 4a, 4b, which are provided to receive the busbars L1 ..L3, N and which are arranged in the holder rails 2a, 2b. In this example there is a lower holder rail 2a and an upper holder rail 2b as well as a left connection profile 3a and a right connection profile 3b. However, there could also be more holder rails 2a, 2b and/or more connection profiles 3a, 3b. Further on, the mounting system 1 comprises frame connectors 5a, 5b, by which the holder rail 2a and thus the whole mounting system 1 can be fixed to the frame of a switchgear. Together with the busbars L1..L3, N the mounting system 1 forms an arrangement 6. In this example, the busbars L1..L3, N form three phases and a neutral line of an AC system. However, other configurations are possible equally.

Fig. 2 shows how the parts of the mounting system 1 can be interconnected. In detail, the busbar holders 4a, 4b are mounted to the holder rails 2a, 2b by busbar holder screws 7a, 7b, the connection profiles 3a, 3b are mounted to the holder rails 2a, 2b by connection profile screws 8a, 8b, and the frame connectors 5a, 5b can be mounted to the holder rails 2a and a switchgear frame by frame connector screws 9a, 9b.

Generally, at least one of the connection profiles 3a, 3b has at least one slot 10 running parallel to a longitudinal extension of said connection profile 3a, 3b, wherein the at least one slot 10 has an undercut in its cross-section. In other words, the at least one of the connection profiles 3a, 3b particularly can comprise a T-slot running parallel to the longitudinal extension of said connection profile 3a, 3b.

In this example, both connection profiles 3a, 3b have an identical cross-section. So, any technical disclosure related to the left connection profile 3a relates to the right connection profile 3b as well and vice versa. Accordingly, the features of the connection profiles 3a, 3b can be explained hereinafter by use of the connection profile 3a only. However, in principle, the connection profiles 3a, 3b may also have different cross-sections.

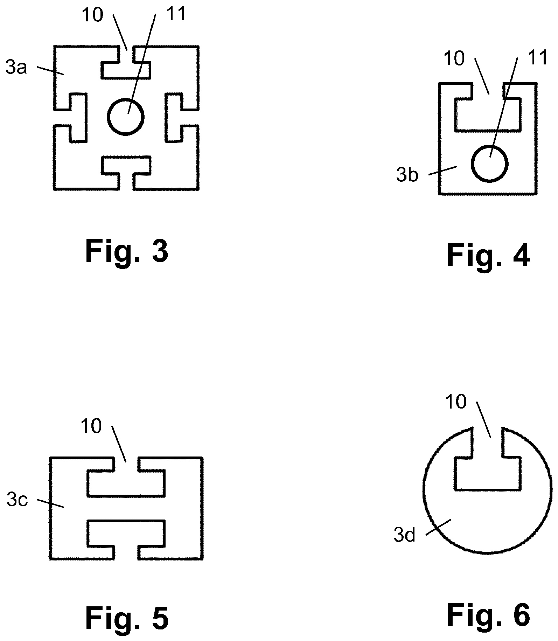

Fig. 3 shows a detailed view of the cross-section of the connection profile 3a used in the mounting system 1 of Fig. 1. The connection profile 3a has four slots 10 and a cross section, which is rotational symmetric by a rotation angle of 90°. So, there is a plurality of possibilities to mount additional equipment to the connection profile 3a. However, other forms are possible as well. For example, Fig. 4 shows an alternative cross-section of a connection profile 3b, which has just one slot 10, and Fig. 5 shows an embodiment of a connection profile 3c, which has two slots 10 and a cross section, which is rotational symmetric by a rotation angle of 180°.

The outer contour of the cross-sections of the connection profiles 3a..3c is rectangular or quadratic. Accordingly, flat mounting surfaces are formed on the connection profiles 3a..3c which can be used for mounting additional equipment.

Another advantage of the rectangular or outer contour is that a rotation of the connection profile 3a..3c relative to the holder rails 2a, 2b is avoided if the holder rails 2a, 2b are strut profiles with an H cross section (like this is the case in the example of Figs. 1 and 2) or U cross section and if a width of the rectangular cross-section of the connection profile 3a..3c matches the inside dimension of the H cross section or U cross section of the holder rail 2a, 2b.

Beneficially, the width of the rectangular cross-section of the connection profile 3a..3c is slightly above the inside dimension of the H cross section or U cross section of the holder rail 2a, 2b. The connection profile 3a..3c is held in a holder rail 2a, 2b by friction then. So, the connection profile 3a..3c does not fall out of the holder rail 2a, 2b unintentionally until the connection profile 3a..3c is finally fixed to the holder rail 2a, 2b by mounting means, e.g. by connection profile screws 8a, 8b or connection profile rivets. This is particularly helpful if a connection profile 3a..3c shall be mounted to a holder rail 2a, 2b upside down. So, the holder rail 2a, 2b acts as a kind of an assembly jig during assembly what eases manufacturing the mounting system 1.

However, it could also be useful if the width of the connection profile 3a..3c is slightly below the inside dimension of the H cross section or U cross section of the holder rail 2a, 2b. In this case, the connection profile 3a..3c fits into a holder rail 2a, 2b easily.

A connection profile 3a..3c may also have an optional hole 11 running along a longitudinal axis of the at least one of the connection profiles 3a..3c, wherein the connection profile 3a..3c is mounted to the holder rails 2a, 2b by means of self-cutting connection profile screws 8a, 8b screwed into said central hole 11. This is the case for the connection profiles 3a, 3b shown in Figs 3 and 4, but in principle also applies to the connection profile 3c in shown in Fig 5.

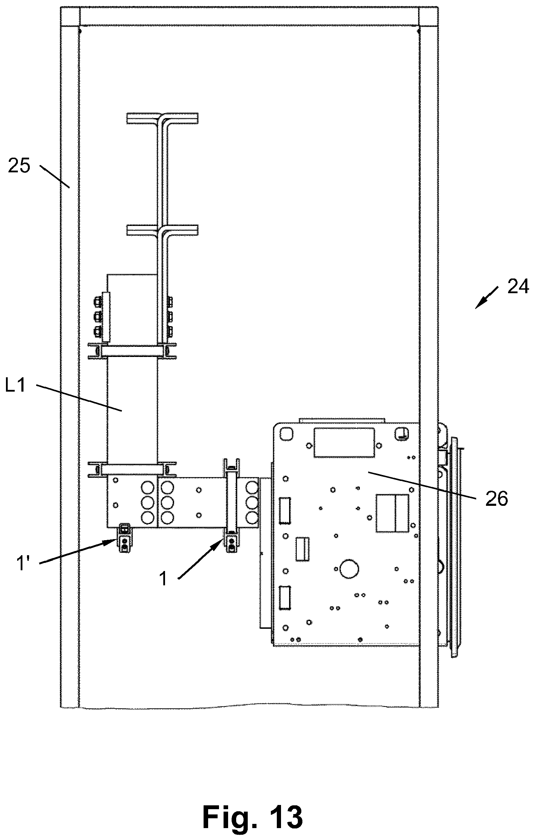

The use of self-cutting connection profile screws 8a, 8b provides a number of advantages. First, no separate thread has to be cut into the connection profile 3a..3c because a self-cutting connection profile screw 8a, 8b cuts the thread itself. Second, a self-cutting connection profile screw 8a, 8b does not turn out on its own easily, even if the mounting system 1 is exposed to vibrations like they occur within a switchgear (see also Fig. 13). Hence, an additional screw locking can be omitted. Third, standard-length connection profile screw 8a, 8b can be used for a variety of lengths of the connection profiles 3a..3c. Hence, the bill of materials can be kept short. Fourth, self-cutting connection profile screw 8a, 8b can be made shorter than screws, which are fixed by a nut. Accordingly, even if a connection profile screw 8a, 8b falls off from the mounting system 1, the likelihood for an arc flash or short circuit caused by the connection profile screw 8a, 8b is comparably low. This is based on the simple reason that a self-cutting connection profile screw 8a, 8b is shorter than a screw fixed by a nut and cannot bridge large gaps between conductors under voltage.

Because of the rectangular or square cross-section of the connection profile 3a..3c, a rotation of the connection profile 3a..3c is avoided, even if just a single connection profile screw 8a, 8b is used to fix the connection profile 3a..3c or even if mounting means for the connection profile 3a..3c, e.g. connection profile screws 8a, 8b or connection profile rivets, unintentionally fall of the mounting system 1 during operation. So, the mounting system 1 is fault tolerant very much.

The connection profile 3a of Fig. 3 is an X-profile, which is commercially available in a number of shapes and in a number of dimensions. So the proposed mounting system 1 can be put into practice quickly by use of this connection profile 3a and at the same time provides the aforementioned advantages.

The connection profile 3a..3c have a rectangular or square outer contour. However, this is no mandatory feature, and a connection profile may also be shaped differently. For example, Fig. 6 shows a connection profile 3d with circular cross section and one slot 10. It should also be noted that the connection profiles 3c, 3d, although this is not depicted in Figs. 5 and 6, may have a central hole 11, too.

Generally, the connection profiles 3a..3d and/or the holder rails 2a, 2b preferably can be embodied as extruded or pultruded profiles. In particular, the connection profiles 3a..3d and/or the holder rails 2a, 2b can be made of a metal (e.g. aluminum) or plastic.

Extrusion and pultrusion provide the advantage that the connection profiles 3a..3d and/or the holder rails 2a, 2b can be produced in standard lengths (several meters) and can be cut later on as desired to fit in any application. Accordingly, the mounting system 1 can be adapted to different heights of the busbars L1..L3, N and/or to different numbers of busbars L1..L3, N easily.

If, the connection profiles 3a..3d and/or the holder rails 2a, 2b are made from fiber reinforced resin, extrusion and pultrusion provide the advantage that areas of different fiber density can be defined within the connection profiles 3a..3d and/or the holder rails 2a, 2b. Hence, the connection profiles 3a..3d and/or the holder rails 2a, 2b can be made more robust where it is desired.

Hence, one further advantage of the proposed solution is that a big range of busbar dimensions and/or busbar configurations can be covered by the mounting system 1 although the parts which are used therefore basically remain the same for all these busbar dimensions and/or busbar configurations. So, flexibility of the mounting system 1 is increased at reduced costs compared to prior art systems. This is particularly true if all connection profiles 3a, 3b have an identical cross-section what even further reduces the bill of materials.

It is particularly advantageous, if the holder rails 2a, 2b are made of plastic and the busbar holders 4a, 4b are made of metal. In this case, the holder rails 2a, 2b provide electrical insulation and hence also avoid induced eddy currents caused by the current through the busbars L1..L3, N. A closed ferrous material loop around the busbars L1..L3, N is avoided naturally by the non-ferrous material of the proposed holder rails 2a, 2b.

Hence, this embodiment is particularly advantageous if the connection profiles 3a..3d are made of aluminum because the plastic holder rails 2a, 2b provide insulation anyway. Nevertheless, the busbar holders 4a, 4b are comparably robust and easily withstand the (electromagnetic) forces occurring in a switchgear. Because the contact surface between a busbar holder 4a, 4b and a holder rail 2a, 2b is comparably large, in addition those high forces can easily be transferred from the busbar holder 4a, 4b to the holder rail 2a, 2b, despite the fact that the holder rail 2a, 2b is made from plastic.

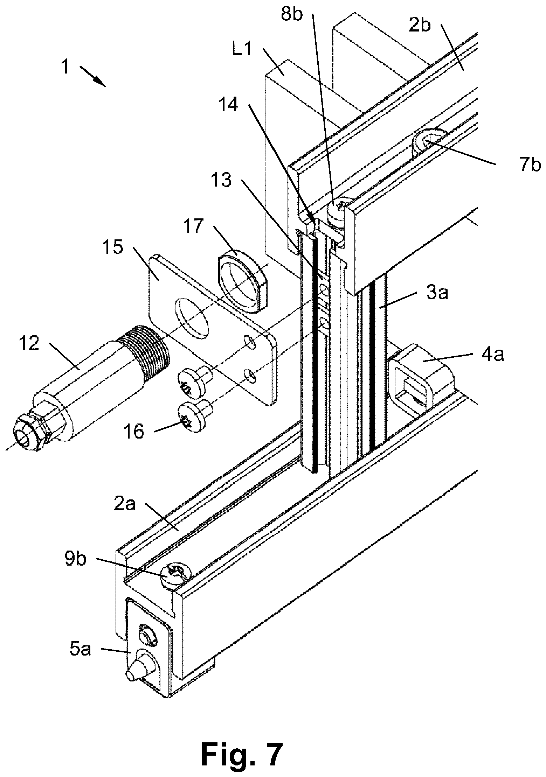

Figs. 7 to 11 now show various examples how additional equipment can be mounted to the connection profiles 3a..3d by use of the at least one slot 10.

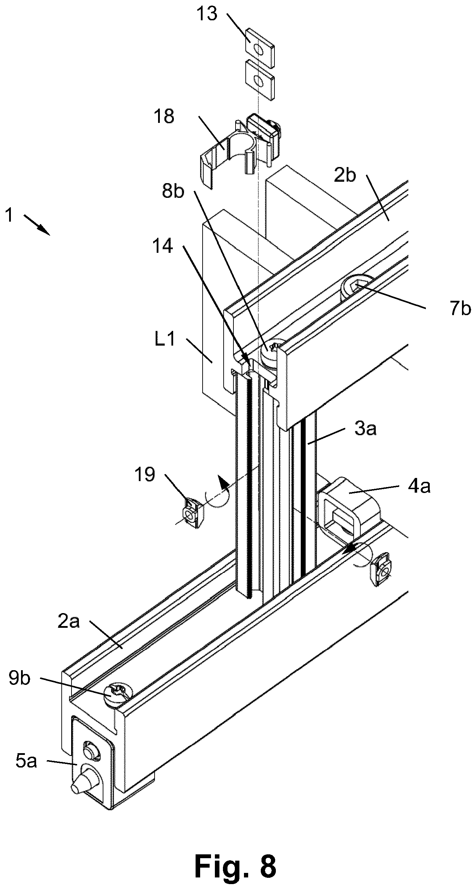

In detail, Fig. 7 shows how a temperature sensor 12 can be mounted to the connection profile 3a. To do so, sliding nuts 13 are inserted into the outer slot 10. To enable this, the upper holder rail 2b comprises a optional cutout 14. However, instead of providing a cutout 14, some sliding nuts 13 can be inserted into the slots 10 of the connection profile 3a at the time of assembling the mounting system 1 for later use. Moreover, there are special nuts, which may be inserted into a slot 10 by a 90°-turn (see Fig. 8).

Further on, a mounting plate 15 is mounted to the connection profile 3a by use of screws 16, which are screwed into the sliding nuts 13. On the mounting plate 15, the temperature sensor 12 is mounted by a nut 17, which is screwed onto a thread on the temperature sensor 12. The temperature sensor 12 is a contactless infrared temperature sensor, which "looks" onto the busbar L1 and measures its temperature.

Fig. 8 shows an example how a cable clip 18 can be mounted to the connection profiles 3a. Again, this is done by sliding nuts 13 and a screw on the cable clip 18 which is turned into one of the sliding nuts 13. In addition, Fig. 8 shows special sliding nuts 19, which may be inserted into a slot 10 by a 90°-turn and may be then used for mounting additional equipment and moved in the slot 10 just like the (standard) sliding nuts 13. Because of the special inserting method, not cutout 14 is needed.

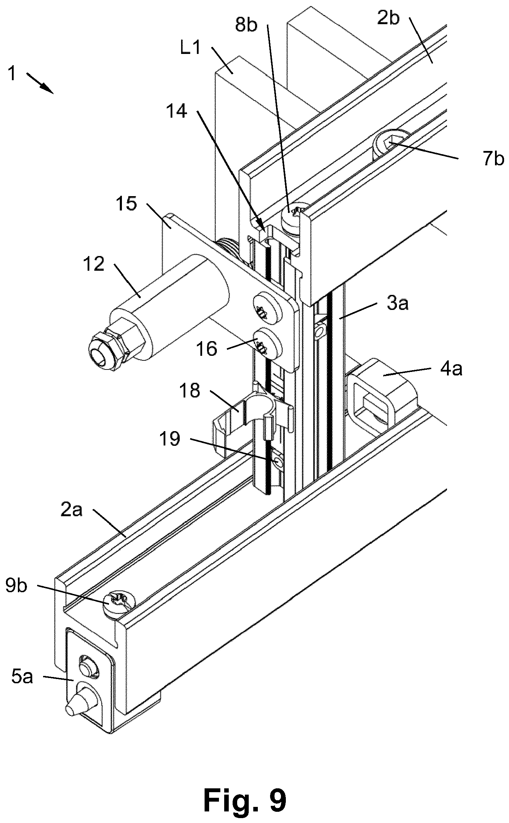

Fig. 9 shows an example, which combines the equipment shown in Figs. 7 and 8. In detail the temperature sensor 12 and the cable clip 18 are shown in the mounted state.

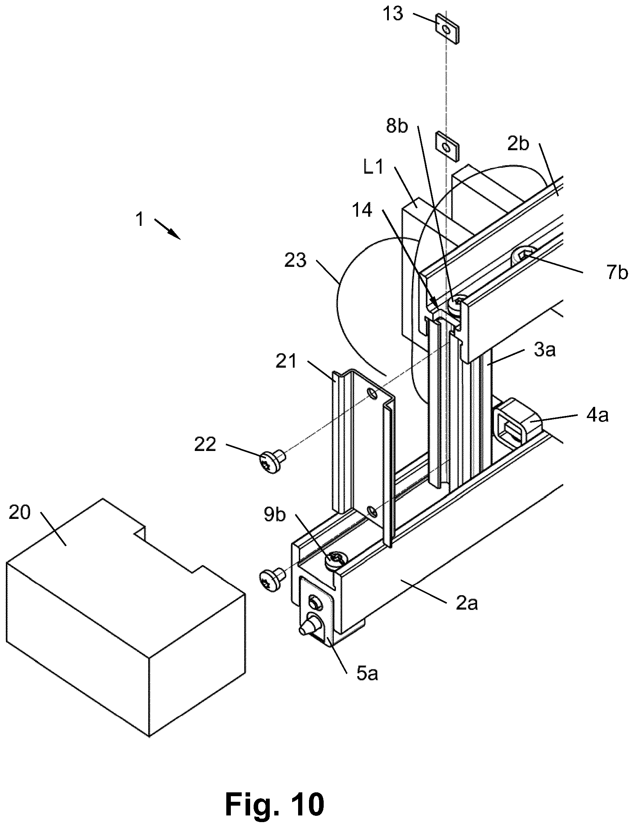

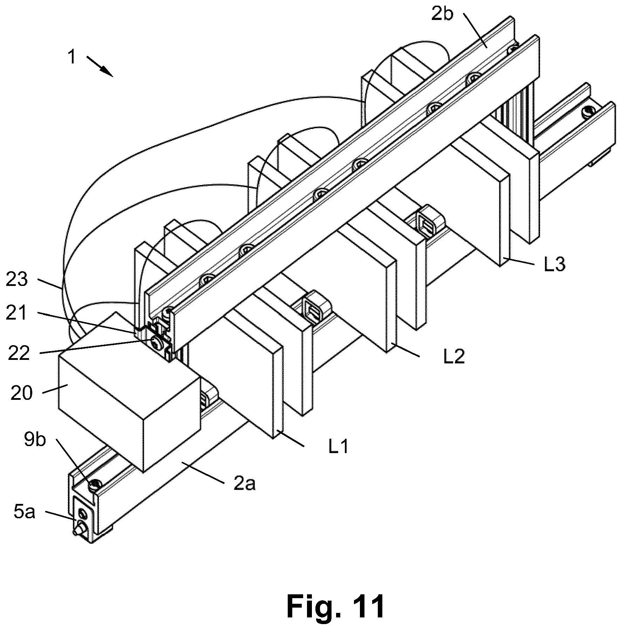

Fig. 10 shows an example how current sensing equipment can be mounted to the connection profile 3a. In detail, a current measuring unit 20 is mounted to the connection profile 3a by use of a mounting profile 21 and screws 22, which are turned into sliding nuts 13. Cables 23 lead to current sensors, which are not explicitly depicted in Fig. 10. Fig. 11 in addition shows the current sensing equipment in the mounted state.

Additional equipment mounted to the connection profiles 3a, 3b is not limited to a temperature sensor 12 and current sensing equipment but can also be formed by a contact temperature sensor, a current sensor of a different kind, a voltage sensor, a power sensor, a wireless transmitter, a wireless receiver and the like. In addition to sliding nuts 13 and 19, T-head bolts, snap-in pins, snap in rivets, expanding rivets, etc. can be used to mount the additional equipment to the at least one slot 10. For the sake of completeness it is noted that additional equipment generally can be part of the claimed arrangement 6.

Preferably, the at least one slot 10 is arranged on a side of the at least one of the connection profiles 3a, 3b which points away from the busbar holders 4a, 4b or points in a direction transverse to a longitudinal extension of the holder rails 2a, 2b. Fig. 11 shows what is meant here by use of hatched side surfaces A..C of the connection profiles 3a, 3b fulfilling the above condition. By doing so, said slots 10 are accessible easily even when assembly of the mounting system 1 is finished and also holds the busbars L1..L3, N. Usually, there is also available space for additional equipment adjacent to said side surfaces A..C in said assembled state of the mounting system 1.

Fig. 13 finally shows a side view of a cut out of an electrical switchgear 24, which comprises a number of busbars L1..L3, N, a frame 25 and a switching device 26 electrically connected to the busbars L1..L3, N. By use of the mounting systems 1, 1', the busbars L1..L3, N are held in position within the electrical switchgear 24. In particular, the mounting systems 1, 1' can be fixed to the frame 25 by means of the frame connectors 5a, 5b and the frame connector screws 9a, 9b.

It is noted that the invention is not limited to the embodiments disclosed hereinbefore, but combinations of the different variants are possible. In reality, the mounting system 1, 1' and the switchgear 24 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### LIST OF REFERENCE NUMERALS

- 1, 1': mounting system
- 2a, 2b: holder rail
- 3a..3d: connection profile
- 4a, 4b: busbar holder
- 5a, 5b: frame connector
- 6: arrangement
- 7a, 7b: busbar holder screws
- 8a, 8b: connection profile screws
- 9a, 9b: frame connector screws
- 10: slot

- 11: central hole
- 12: temperature sensor
- 13: (standard) sliding nut
- 14: cutout
- 15: mounting plate
- 16: screw
- 17: nut
- 18: cable clip
- 19: (special) sliding nut
- 20: current measuring unit

- 21: mounting profile
- 22: screw
- 23: cable
- 24: switchgear
- 25: switchgear frame
- 26: switching device

- A..C: side surfaces of connection profile
- L1..L3, N: busbar

## Claims

1. Mounting system (1, 1') for busbars (L1..L3, N) of an electrical switchgear (12), comprising
- a plurality of holder rails (2a, 2b),
- connection profiles (3a..3d) to interconnect the holder rails (2a, 2b) and to effect a distance between the holder rails (2a, 2b) and
- a plurality of busbar holders (4a, 4b), which are provided to receive the busbars (L1 ..L3, N) and which are arranged in the holder rails (2a, 2b), **characterized in that**
- at least one of the connection profiles (3a..3d) has at least one slot (10) running parallel to a longitudinal extension of said connection profile (3a..3d), wherein the at least one slot (10) has an undercut in its cross-section.

2. Mounting system (1, 1') as claimed in claim 1, **characterized in that** the at least one of the connection profiles (3a..3d)
- has two slots (10) and a cross section, which is rotational symmetric by a rotation angle of 180°, or
- has four slots (10) and a cross section, which is rotational symmetric by a rotation angle of 90°.

3. Mounting system (1, 1') as claimed in claim 1 or 2, **characterized in that** additional equipment is mounted to the at least one of the connection profiles (3a..3d) by use of the at least one slot (10).

4. Mounting system (1, 1') as claimed in any one of claims 1 to 3, **characterized in that** the at least one slot (10) is arranged on a side surface (A..C) of the at least one of the connection profiles (3a..3d) which points away from the busbar holders (4a, 4b) or points in a direction transverse to a longitudinal extension of the holder rails (2a, 2b).

5. Mounting system (1, 1') as claimed in any one of claims 1 to 4, **characterized in that** an outer contour of the cross-section of the at least one of the connection profiles (3a..3d) is rectangular, in particular quadratic.

6. Mounting system (1, 1') as claimed in claim 5, **characterized in that**
- the holder rails (2a, 2b) are strut profiles with an H cross section or U cross section and
- a width of the rectangular cross-section of the at least one of the connection profiles (3a..3d) matches the inside dimension of the H cross section or U cross section of the holder rail (2a, 2b).

7. Mounting system (1, 1') as claimed in any one of claims 1 to 6, **characterized in that**
- the at least one of the connection profiles (3a..3d) has a central hole (11) running along a longitudinal axis of the at least one of the connection profiles (3a..3d) and
- the at least one of the connection profiles (3a..3d) is mounted to the holder rails (2a, 2b) by means of self-cutting connection profile screws (8a, 8b) screwed into said central hole (11).

8. Mounting system (1, 1') as claimed in any one of claims 1 to 7, **characterized in that** all connection profiles (3a..3d) have an identical cross-section.

9. Mounting system (1, 1') as claimed in claim 1 or 8, **characterized in that** the at least one of the connection profiles (3a..3d) is embodied as an extruded or pultruded profile and made of aluminum or plastic.

10. Mounting system (1, 1') as claimed in any one of claims 1 to 9, **characterized in that** the holder rails (2a, 2b) are made of plastic and the busbar holders (4a, 4b) are made of metal.

11. Mounting system (1, 1') as claimed in claim 1 or 10, **characterized in that** the holder rails (2a, 2b) are embodied as extruded or pultruded profiles.

12. Arrangement (6), **characterized in** a plurality of busbars (L1..L3, N) and a mounting system (1, 1') according to any one of the claims 1 to 11, by which the busbars (L1 ..L3, N) are fixed.

13. Electrical switchgear (24), comprising
- a number of busbars (L1 ..L3, N) and
- at least one switching device (26) electrically connected to the busbars (L1..L3, N),
**characterized in**
- a mounting system (1, 1') according to any one of the claims 1 to 11, by which the busbars (L1 ..L3, N) are held in position within the electrical switchgear (24).
